# EUROPEAN PATENT APPLICATION

(11) **EP 2 442 001 A2**
(43) Date of publication of application: **18.04.2012**
(21) Application number: 11185214.1
(22) Date of filing: 14.10.2011
(51) Int. Cl.: F16L 55/105, F16K 27/04

(54) **Stop valve**

(30) Priority: 15.10.2010 DK 201070440
(71) Applicant: JH1010 ApS, 3080 Tikøb (DK)
(72) Inventor: Kleemann, Flemming, 3080 Tikøb (DK); Hansen, William, 3310 Ølsted (DK)
(74) Representative: Nielsen, Leif

(57) **Abstract**

The present invention concerns a kit for a stop valve for a pipe with a centre axis, a radial direction and axial direction, the kit including:
- a valve body (11) with a cutting edge, the valve body adapted for complete or partial insertion in a pipe in a dividing plane;
- a valve housing (13) with guide means for radial guiding of the valve body;
- at least one jacket (15) including sealing means for sealed connection between the valve housing and a pipe, and gripping means (17) for gripping a pipe, where the valve housing and the at least one jacket include interacting connecting means (18,20,21,22) separate from the sealing means (16), the connecting means being formed by a form connection in axial direction.

## Description

### Field of the Invention

The present invention concerns a kit for a stop valve for a pipe with a centre axis, a radial direction and axial direction, the kit including:
- a valve body with a cutting edge, the valve body adapted for complete or partial insertion in the pipe in a dividing plane;
- a valve housing with guide means for radial guiding of the valve body;
- at least one jacket including sealing means for sealed connection between the valve housing and a pipe, and gripping means for gripping a pipe, where the valve housing and the at least one jacket include interacting connecting means separate from the sealing means, the connecting means being formed by a form connection in axial direction.

The present invention also concerns a stop valve provided by elements of the said kit.

### Background of the Invention

The present invention relates to equipment and methods for stopping a flow of a fluid in a pipe or the like without first having to shut off the flow at another point. This is the case whether speaking of a fluid such as a gas, a liquid or a mass in solid state. Also, the type of pipe is less important as typically it will be a cylindric pipe or piece of a pipe.

Technical solutions solving this problem are known. For example, from the patent US 5,732,728 it is known with a method for inserting a stop valve in a pipe. The method describes use of a housing with an aperture, where the housing can be mounted and rotated around a pipe, a sealing means for sealing the opening during the cutting itself of a pipe, cutting means for cutting through a pipe and means for inserting a valve body in a pipe.

Furthermore, from the patent JP 2001146996 is known a kit suited for a stop valve for a pipe.

However, these solutions are characterised by requiring extensive and costly equipment which in addition requires some free space around a pipe in order to be used.

It is also a known problem that even though the equipment is capable of shutting off the flow of fluid without shutting off the flow at other points, the equipment leaves the fluid contaminated as material from the cutting of the pipe enters the pipe itself. Depending on pressure, flowrate and the time used for mounting the damper which is a kind of valve body stopping the flow, the contamination may spread with the flow over a considerable distance whereby the idea of inserting a stop valve is more or less without meaning.

### Object of the Invention

The object of the present invention is to indicate a technical solution that reduces or eliminates contamination of the fluid in the pipe in which the flow of fluid is to be stopped.

A further object of the present invention is to indicate a technical solution which easily can be assembled at the site in connection with stopping the fluid flow.

A further object of the present invention is to indicate a technical solution which consists of components that can be left after permanently stopping or entirely or partially resuming the fluid flow.

A further object of the present invention is to indicate a technical solution that ensures to a greater or lesser extent that a pipe in which the flow of fluid is to be stopped, being a whole pipe, a partially cut pipe and as two separate pipes, during the insertion and/or after inserting the damper more or less has the same structural shape in the sense that at least one point at each side of the region where a pipe is penetrated more or less have the same mutual distance.

### Description of the Invention

The above is fulfilled by a kit for a stop valve for a pipe with a centre axis, a radial direction and axial direction, the kit including:
- a valve body with a cutting edge, the valve body adapted for complete or partial insertion in the pipe in a dividing plane;
- a valve housing with guide means for radial guiding of the valve body;
- at least one jacket including sealing means for sealed connection between the valve housing and a pipe, and gripping means for gripping a pipe, where the valve housing and the at least one jacket include interacting connecting means separate from the sealing means, the connecting means being formed by a form connection in axial direction.

Thereby is achieved that the stop valve can be assembled around a given pipe by the individual elements in the kit. It is furthermore achieved that from the said kit for a stop valve, elements can be selected for a kind of pipe with a given conduction of various fluids or types of pipe.

The fixed form connection ensures that pipe parts in the cutting edge are not compressed, not twisted or deformed in other ways such that cutting is performed in a pipe in a uniform way, thereby ensuring that cuttings or material from a pipe does not contaminate inside the pipe by cutting action.

The above is fulfilled by a kit for a stop valve for a pipe with a centre axis, a radial direction and axial direction, the kit including:
- a valve body with a cutting edge, the valve body adapted for complete or partial insertion in the pipe in a dividing plane;
- a valve housing with guide means for radial guiding of the valve body;
- at least one jacket including sealing means for sealed connection between the valve housing and a pipe, and gripping means for gripping a pipe, where the valve housing and the at least one jacket include interacting connecting means separate from the sealing means, the connecting means being formed by a form connection in axial direction, wherein the valve housing in an interior and around the guide means is provided with a recess for receiving material, such as cuttings, particles or the like, from a pipe.

The recess can hereby receive pipe material from a pipe as the valve body works itself through a pipe. In a typical situation, the fluid in a pipe will be pressurised, and by breakage of the inner periphery of a pipe the pressure from the fluid will press pipe material out of a pipe, which pipe material will be collected in the recess.

According to the invention, the sealing means are uncoupled between the stop valve and a pipe. The sealing means can thereby be made relatively soft or hard, respectively, for adapting to the sealing depending on the fluid in a pipe. The sealing means can e.g. be made relatively soft for adapting to a large variation in the dimension of a pipe or the character of the surface.

According to the invention, the gripping means are uncoupled between the stop valve and a pipe from the connecting means between the stop valve and a pipe.

The gripping means can thereby be made strong in order to establish a good or firm grip about pipes of different types or about pipes with surfaces of different nature.

The interior of the valve housing has a complementary shape to a pipe to be enclosed. A pipe typically has a circular cross-section why an inner surface of the valve housing also has a circular cross-section.

According to a preferred embodiment, the valve housing consists of two parts. A first valve housing part and a second valve housing part, which valve housing part are designed to embrace a pipe.

Each valve housing part thus has an inner surface which in the cross-section of the centre axis has the shape of a semi-circle for surrounding a circular pipe. Each valve housing part may thereby be placed on a pipe and clamped together into forming an assembled valve housing.

According to a preferred embodiment, the jacket consists of two parts. A first jacket part and a second jacket part, which jacket parts are designed to embrace a pipe.

Each jacket part thus has an inner surface which at the cross-section of the centre axis has the shape of a semi-circle for surrounding a circular pipe. Each jacket part may thereby be disposed about a pipe and a part of the valve housing.

According to a further embodiment, the kit for the stop valve is peculiar in that at each side of the dividing plane along the axial direction, the valve housing is extended with a neck, along which necks there is provided at least one collar designed for interaction with at least one complementing groove in each jacket. Each neck and each collar together with each groove in each jacket hereby constitutes the connecting means which is a form connection. Also, an identical or corresponding form connection is formed at the opposite side of the dividing plane. Two such form connections constitute by themselves an assembled form connection.

In a preferred embodiment, the necks at each side are two-part as well as the valve housing is divided into a first and a second valve housing part.

Each valve housing part thus has neck part which in cross-section of the centre axis has the shape of a semi-circle for embracing a circular pipe.

According to a further embodiment, the kit for the stop valve is peculiar in that the connecting means are provided for rotation about the centre axis, the connecting means e.g. made as the neck which in cross-section at right angles to the centre axis has a circular projection in the form of the collar for fitting and rotation in a complementary circular groove in the jacket.

The valve housing with the valve body can hereby be turned around a pipe whereby the valve body can work itself from an outer periphery of a pipe through a pipe to the inner periphery of a pipe. This is particularly achieved by the valve body being moved in radial direction against the centre axis simultaneously with the valve housing being turned around a pipe. Thereby, the valve body is moved in a helical movement through a pipe.

According to a further embodiment, the kit for the stop valve is peculiar in that the valve body has at least one cutting edge.

The valve body can hereby be moved through a pipe.

In an embodiment, the cutting edge is a long edge extending across two extreme points of a pipe periphery. The valve body can thus cut the valve body like a guillotine.

In an embodiment, the cutting edge is made as cavity with a cavity opening in the valve body. In an embodiment, there is provided a cutting projection at each side of the cavity opening. The cutting edge will thus function by rotating one way around a pipe as well as the other way around a pipe.

In an embodiment there is provided a cutter projection at one side of the cavity opening and a rounded area at the other side of the cavity opening, the rounded area acting as a support for the valve body against a pipe, thereby defining how deep into a pipe the cutter projecting can go into a pipe. In this embodiment, attacking and cutting is only performed by rotating the valve housing around a pipe in one direction.

By rotating the valve housing around a pipe in the opposite direction, the rounded area will prepare a pipe for cutting.

In a special embodiment, the cutting edge is a rotating cutter like an angle grinder blade.

The cavity has a shape with curving areas for forming and guiding cuttings from a pipe away from the cutting itself.

According to a further embodiment, the kit for the stop valve is peculiar in that in connection with and tightly fitting on the valve housing, the kit further includes an insertion structure for an inserting device for complete or partial guiding of the valve body in radial direction, the insertion structure e.g. consisting of one or more of the following: a valve housing block, a valve housing top, a valve housing cover in which there is access for guide means, and which insertion device e.g. is a spindle interacting with a spindle thread.

By the insertion structure is meant an internally open or partly open area of the valve housing, the area being a cavity which is adjusted or adapted to the insertion device which is a device providing a force which preferably is directed towards the centre axis against the valve body.

In an embodiment, the insertion structure is made as a hollowing of the valve housing and with grooves in the valve housing itself.

According to a further embodiment, the insertion structure is produced by a number of elements built together around a pipe. The valve housing can thus be extended with a valve housing block particularly embracing and providing structural support for the insertion device. The valve housing block may furthermore be open in radial direction or be designed for mounting of a further valve housing top and/or a valve housing cover. All the said elements have means for a composition that is tight and has an inner structure providing space for the insertion device.

In order to adapt the shape of the insertion structure to the valve housing or to several types of valve bodies, guide means are provided for guiding and positioning the valve body in relation to a pipe. By the guide means, which can be a pair of opposing grooves or rails, the dividing plane is defined as well, and the valve body is guided smoothly in the dividing plane in the form connection.

According to a preferred embodiment, the insertion means is a spindle acting in a spindle thread fastened to the valve body. By rotation about its own shaft through the spindle thread, the spindle can provide a force and a positioning of the valve body in radial direction.

According to a further embodiment, the kit for the stop valve is peculiar in that the insertion device and the valve housing have means for mounting and dismounting the insertion device to/from the valve housing.

The insertion device can hereby be removed after inserting the valve body into a pipe and reused in another kit or at another place.

According to an embodiment, the means for mounting are bolts or clamps and means like holes and projections for receiving the bolts or clamps.

According to a further embodiment, the means for mounting and dismounting the insertion device is a screw thread set in the valve housing and in the insertion device, respectively.

In an embodiment, the recess is a cavity in the valve housing, the cavity completely or partially enclosing the area around the cutting edge in the valve body.

According to a further embodiment, the kit is a master kit for the stop valve and peculiar by including at least two units of any of the unit types: the valve body, the valve housing, the connecting means and the jacket, the unit types being made of various materials, in various dimensions, the unit types being provided with uniform assembling means and/or assembling structures between the various unit types.

The kit can hereby be used for various types of pipes and fluids at different pressures. The master kit is particularly applicable in situations where a buried pipe appears to be of a type which is different from what is expected. The master kit thereby provides possibility of flexibly assembling one stop valve from several possible stop valves.

By uniform assembling means and/or assembling structures between the various unit types is meant, for example, that each unit type in the master kit has the same screw thread dements and type of screw thread, and that each unit type has complementing contact surfaces for assembling the various unit types.

According to a further embodiment, the possible other elements of the valve housing, like the valve housing block, valve housing top and valve housing cover, will be designed with complementing contact faces for assembling the various parts. Furthermore, the invention concerns a stop valve which is peculiar in that the stop valve is made from elements of the said kit.

Hereby is meant a stop valve made as a single unit or as a unit composed of the elements or components described above.

According to a special embodiment of the stop valve, there is provided a stop valve where the valve housing in the axial direction has an opening such that the valve housing can grip around a given pipe after which the opening can be closed. Also, each jacket can have an opening in axial direction for enclosing a pipe and connection around and to the neck and collar of the valve housing.

The invention furthermore concerns a method for stopping flow of a fluid in a pipe, consisting of the following steps:
- selecting a valve housing from the kit and mounting the valve housing around a pipe;
- selecting at least one jacket from the kit and mounting the at least one jacket around the valve housing and a pipe;
- fastening the at least one jacket to a pipe;
- selecting the valve body from the kit and inserting the valve body in a pipe by:
   - insertion of the valve body in radial direction in and through a pipe by using the insertion device; or
   - in combination with the above, a rotation of the valve body around the centre axis by gradual insertion in radial direction through a pipe.

A pipe is thereby divided into two parts by the valve body and the flow of fluid in a pipe is stopped.

The selection of elements from the kit can take place whether there are several elements in the kit or just one element in the kit.

According to the invention, it is obvious to the skilled in the art to use sealing means as required between the elements and parts mentioned by the invention. The sealing means are selected depending on the fluid and the pressure as well as the material and the nature of a pipe.

### Description of the Drawing

The present invention is illustrated by an embodiment in the following Figures, wherein:
- Fig. 1: shows an isometric and exploded view of a kit for a stop valve for a pipe;
- Fig. 2: shows a plan view perpendicular to the axial direction defined in Figure 1 of an embodiment of a valve body;
- Fig. 3: shows an isometric view of a first valve housing part with a valve housing block;
- Fig. 4: shows a plan view of a first valve housing part with a valve housing block as seen A: from the outside, and B: seen from the inside with an inner surface for enclosing a pipe;
- Fig. 5: shows an isometric view of a second valve housing part with a valve housing belt for coupling together with the first valve housing part on Fig. 4;
- Fig. 6: shows a plan view of the second valve housing part as seen from the inside with an inner surface for enclosing a pipe;
- Fig. 7: shows views of guide means in A: a plan view perpendicular to the radial direction and in parallel with the axial direction, in B: a plan view perpendicular to the radial direction and viewed from the outside towards the centre axis, and in C: a plan view perpendicular to the axial direction;
- Fig. 8: shows a jacket in A: an isometric view with a first jacket part and a second jacket part, and in B: a plan view perpendicular to the radial direction and seen from the inside out from the centre axis;
- Fig. 9: shows a valve housing top in A and B, wherein A: shows a plan view perpendicular to the radial direction and seen from the outside towards the centre axis, and B: shows a plan view perpendicular to the radial direction and in parallel with the axial direction, and C: a plan view perpendicular to the radial direction and in parallel with the axial direction a valve housing cover;
- Fig. 10: shows in A: a sectional view of a spindle thread and in B: an associated spindle;
- Fig. 11: shows a view perpendicular to the centre axis and by partial x-ray section an assembled stop valve around a pipe where the valve housing is outside a pipe and ready to cut a pipe, and how the valve housing can be rotated about the centre axis of a pipe;
- Fig. 12: shows a view perpendicular to the centre axis and by partial x-ray section an assembled stop valve around a pipe where the valve body is cutting a pipe and how the valve housing is rotated about the centre axis of a pipe as compared to Fig. 11;
- Fig. 13: shows a view perpendicular to the centre axis and by partial x-ray section an assembled stop valve around a pipe where the valve body is through the inner periphery of a pipe and ready to be moved through a pipe by linear movement radially through a pipe; and
- Fig. 14: shows a view perpendicular to the centre axis and by partial x-ray section an assembled stop valve around a pipe where the valve body is passed through a pipe for a full dividing and thereby closing of a pipe.

### Detailed Description of the Invention

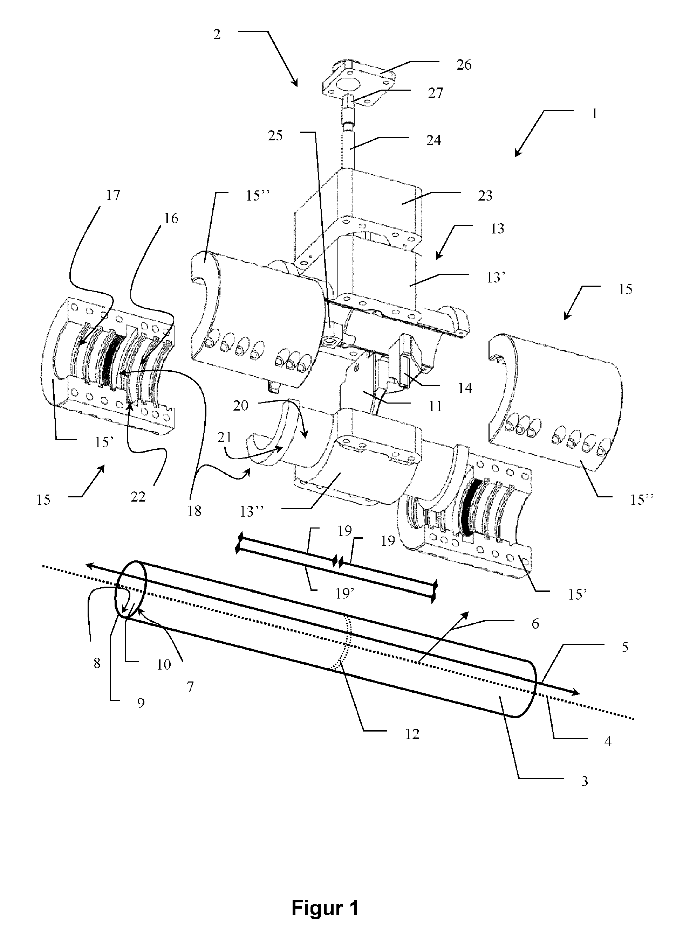

Fig. 1 shows an isometric and exploded view of a kit 1 for a stop valve 2 for a pipe 3. It is understood that the elements in the kit 1 can readily be assembled around a pipe 3 whereby the elements of the kit 1 assembled and mounted on a pipe 3 constitute the stop valve 2 itself.

The individual elements will be described in detail in the subsequent Figures.

The shown exploded view of the stop valve 2 may in some cases require that e.g. two interacting elements are separated whereby a reference number in this kind of view can lead to two or more points on the Figure without thereby causing an unclear or ambiguous definition.

The degree of the exploded view, i.e. primarily the spatial distance between the elements, is so that a skilled in the art can immediately read how the elements belong together. The centre of the explosion is in the central area of the Figure itself.

It can also be derived from the Figure that an implosion of the kit 1 elements will form the stop valve 2 itself.

With regard to clarity, a pipe 3 and the exploded stop valve 2 are shown mutually displaced.

A pipe 3 has a centre axis 4 to which there is an axial direction 5 and a radial direction 6. In the following, the kit 1 for the stop valve 2 is described in relation to these directions.

In the actual embodiment, the kit 1 and the stop valve 2 are for a pipe 3 having an outer periphery 7 and an inner periphery 8, between which a pipe 3 in a tube material 9 is provided along a generatrix which in the shown embodiment is linear.

A pipe 3 thus leads a fluid 10 along the generatrix as a flow of the fluid 10 in direction along the generatrix defines a flow direction, and against the flow of fluid 10 in opposite direction defines a counterflow direction.

The kit 1 for the stop valve 3 includes a valve body 11 adapted for complete or partial insertion into a pipe 3 whereby a dividing plane 12 is defined, the section provided thereby through a pipe 3 is hatched on the Figure.

In the shown embodiment, the valve body 11 operates in a valve housing 13 where the valve body 11 is guided by guide means 14. In the actual embodiment of the kit 1, the valve housing 2 is two-part, with a first valve housing part 13' and a second valve housing part 13".

The kit 1 for the stop valve 2 also consists of two jackets 15 in the shown embodiment. One jacket 15 for disposition at each side of the dividing plane 12. In the actual embodiment of the kit 1, each jacket 15 is two-part in a first jacket part 15' and a second jacket part 15".

Each jacket 15 has sealing means 16 such that the jacket 15 mounted together with the valve housing 13 form a tight connection between the valve housing and a pipe 3.

Each jacket 15 also has gripping means 17 such that the jacket 15 can grip around a pipe 3.

The sealing means 16 and the gripping means 17 are only shown on one jacket 15 in the Figure for the sake of clarity. In the shown embodiment the two depicted jackets 15 are identical and shown reversed about the dividing plane 12.

In each jacket 15 and to each jacket 15 in the valve housing 13 there are connecting means 18 forming a form connection 19 such that each jacket 15 via the gripping means 17 grip a pipe 3, ensuring that stresses or forces in axial direction 5 in a pipe 3 are transmitted through the valve housing 2 via the connecting means 18 and the valve housing 13 with the guide means 14, with the valve body 11 acting in the dividing plane 12. A jacket 15 on one side of the dividing plane 12 on a pipe 3 ensures that this side of a pipe 3 is not displaced axially 5 in relation to the area in which the valve body 11 is inserted in a pipe 3. Similarly, a second jacket 15 on the other and opposite side of the dividing plane 12 on a pipe 3 ensures that the side of a pipe 3 is not displaced axially 5 in relation to the area in which the valve body 11 is inserted in a pipe 3.

In the shown embodiment with two jackets 15 and the valve housing 13 is achieved a total form connection 19' which ensures that stresses or forces in a pipe 3 from both sides of the dividing plane 12 are reduced or eliminated as the valve body 11 is inserted in a pipe 3. Thereby there is basis for uniform penetration into or cutting of a pipe 3 from an area of the outer periphery 7 to another and preferably opposite area of the outer periphery 7 or by milling around the outer periphery 7 through the pipe material 9 to the inner periphery 8. Thereby is avoided or minimised that pipe material 9 in the form of cuttings or parts enters a pipe 3 and follow the flow of fluid 10.

The connecting means 18, here shown symmetrically at each side of the dividing plane 12, are provided on the valve housing 13 in the shown embodiment as a neck 20, where a collar 21 interacting with a groove 22 in the jacket 15 is provided in axial direction in the neck 20.

In the shown embodiment, there is provided a valve housing top 23 in connection with the valve housing 13 in the area around the dividing plane 12 in radial direction 6, through which top 23 a spindle 24 at one end acts with a spindle thread 25 which in turn is provided for fastening to the valve body 11.

Outermost, in radial direction 6 and around the spindle 24 for free rotation of the spindle 24, there is a valve housing cover 26 tightly finishing the valve housing 13. Outside the valve housing 13 itself there is a free end of the spindle 24, the free end having a spindle grip 27 which fits a tool for rotation of the spindle 24 about the shaft of the spindle 24, whereby via the spindle thread 25 there is provided a movement in radial direction 6 of the valve body 11 which thereby can be inserted in a pipe 3.

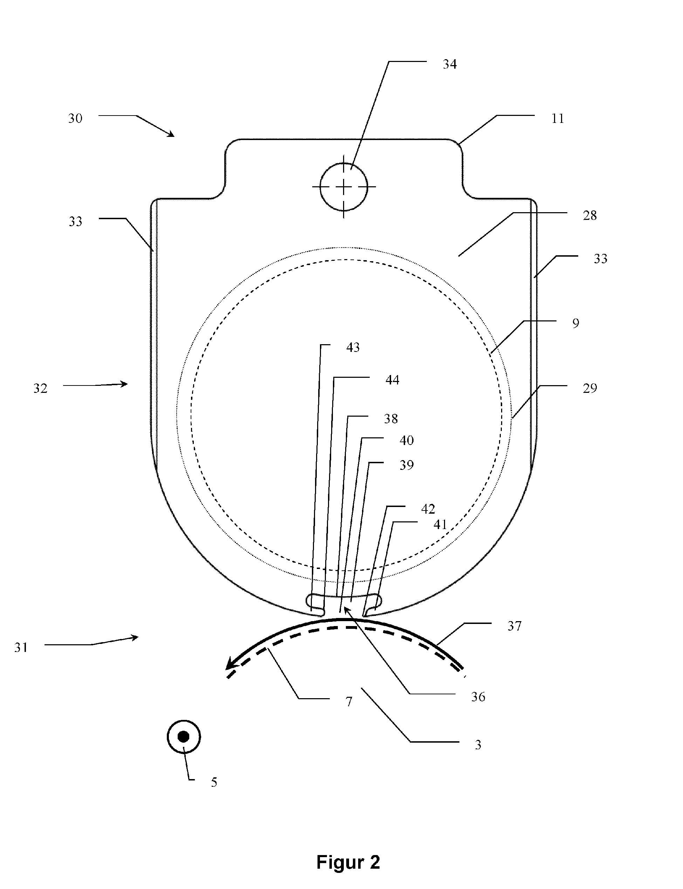

Fig. 2 shows an embodiment of the valve body 11 on Fig. 1 and seen perpendicularly on the axial direction 5. In the following, reference is made to elements of the kit 1 on Fig. 1.

The valve body 11 is preferably a flat structure which, when the valve body 11 is disposed in the valve housing 13, is located in the dividing plane 12.

The valve body 11 has a plane valve body surface 28 at both sides of the dividing plane 12, the surface 28 having a stop area 29 covering or enclosing the outer periphery 9 of a pipe 3, the outer periphery 7 being shown displaced in over the valve body 11.

The valve body 11 has a first end 30 and opposite it a second end 31 and herebetween a central area 32.

At each side at the end of the central area 32, the valve body 11 has a groove 33 for a linear guiding in the guide means 14.

At the first end 30, the valve body 11 has an opening 34 for interacting with the spindle thread 25. In the shown embodiment, the opening 34 is circular and the spindle thread 25 has a cylindric extension for rotatable mounting such that the valve body 11 can rotate in the dividing plane 12.

The other end 31 of the valve body 11 is convex and is provided with a cutting edge 36 at the other end 31. The cutting edge 36 is designed to cut into a pipe 3 in a cutting direction 37 in immediate vicinity and contact with an area in or between the outer periphery 7 and the inner periphery 8 of a pipe 3, of which a part is illustrated in the Figure.

The cutting edge 36 is designed as a cutout 38 in the other end 31 of the valve body 11, the cutout 38 forming a cavity 39 with a cavity aperture 40 to which is a first cutter projection 41 with a sharp edge 42 for cutting or milling a pipe 3. At the opposite side of the cavity aperture 40, there is a second cutter projection 43 which ends with a rounded area 44.

The cutting edge 36 can thereby make way into a pipe 3 which is convex. As the valve body 11 is turned around a pipe 3 in the cutting direction 37 with a force against a pipe 3 from the first cutter projection 41 towards the second cutter projection 43, the second cutter projection 43 will form a guide against a pipe 3, and together with the width of the cavity aperture 40 contribute to defining a cutting depth 45 of the cutting edge 36 relative to the curvature of the pipe 3 itself.

By rotating the valve body 11 in direction opposite the cutting direction 37, the cutting edge 36 in the actual embodiment with the second cutter projection 42 having a rounded area 44 will prepare a pipe 3 by i.a. removing dirt or cuttings from and/or smooth the outer periphery of a pipe 3 in the area where the valve body 11 operates.

In the actual embodiment of the valve body 11, the cavity 39 further acts as collecting and discharge area for cuttings from the cutting action in a pipe 3. The cavity 39 has a cross-sectional size and extension transversely of the axial direction 5 providing that cuttings from a pipe 3 can be conducted or collected in e.g. the guide means and/or the valve housing itself as it will appear below.

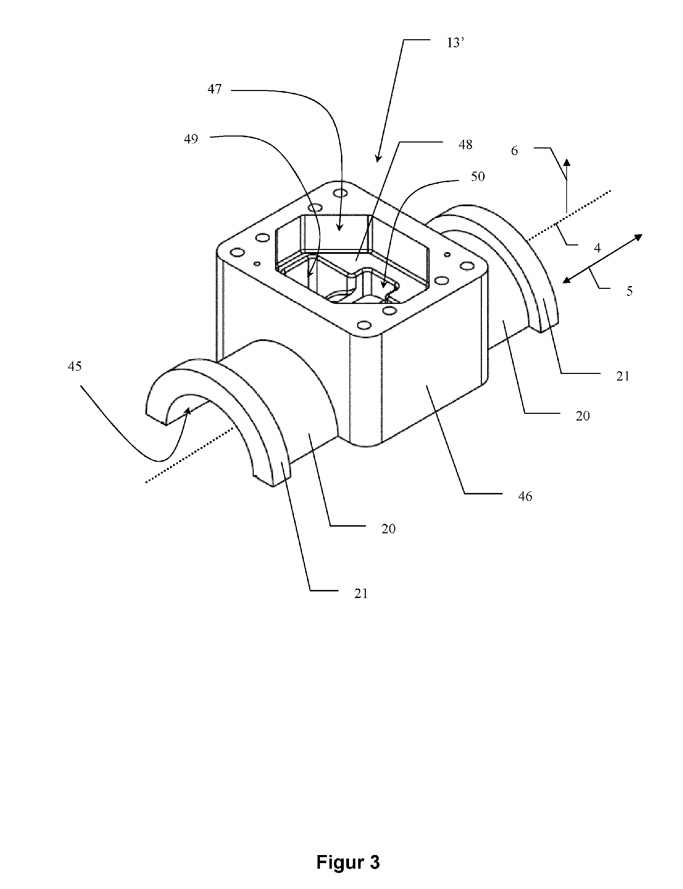

Fig. 3 shows an isometric view of an embodiment of a part of the valve housing 13, which part is a first valve housing part 13' as from Fig. 1.

The first valve housing part 13' has a first inner surface 45 for bearing on a pipe 3. In the embodiment, the first inner surface 45 in the cross-section of the axial direction 5 is a semi-circle that fits with a corresponding opposite semi-circle in the other valve housing part 13".

The first valve housing part 13' has a valve housing block 46 in the central area in radial direction away from a pipe. The valve housing block 46 is hollowed convexly against the centre axis 4 with a valve housing fit 47 in such a way that the guide means 14, the valve body 11 and the valve housing top 23 on Fig. 1 can be inserted into the valve housing block 46.

In the valve housing fit 47 in the valve housing block 46, there is a contact surface 48 for receiving the valve housing top 23. In the valve housing fit 47 in the valve housing block 46, there is a guide 49 for interacting with the guide means 14. In the valve housing fit 47 in the valve housing block 46, there is a recess 50 for receiving cuttings from the cutting through of a pipe 3.

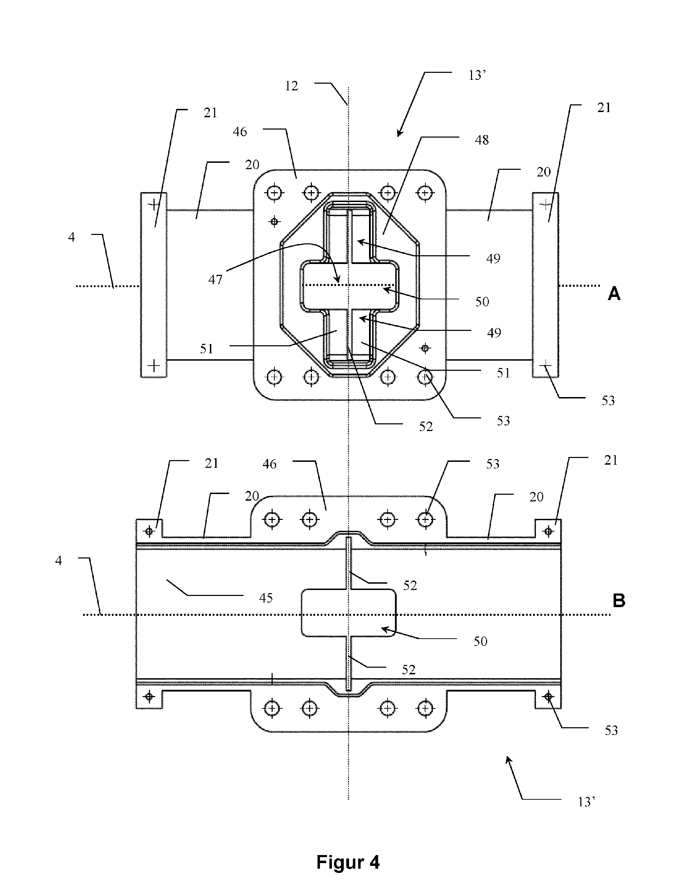

Fig. 4 shows a plan view of the first valve housing part 13' as seen from outside, Fig. 4A, and from inside, Fig. 4B. By "from outside" is meant in radial direction towards the centre axis 4. By "from inside" is meant in radial direction away the centre axis 4.

In continuation of Figs. 1 and 3, the A-view shows the first valve housing part 13' as seen from the outside and with the valve housing block 46 with the neck 20 at each side in the axial direction 5 and each neck ended by the collar 21.

In the valve housing fit 47 in the valve housing block 46, there is the contact surface 48 for receiving the valve housing top 23. In the valve housing fit 47 in the valve housing block 46, there is the guide 49 for interacting with the guide means 14. In the valve housing fit 47 in the valve housing block 46, there is the recess 50 which provides space for the spindle thread 25 and for receiving cuttings from the cutting action on a pipe 3. In this view of the embodiment of the valve housing fit 47 appears a bearing for receiving the guide means 51.. A slot 52 for the valve body 11 is provided in the valve housing fit 47.

The first valve housing part 13' has clamping devices 53 for assembling the first valve housing part 13' with the second valve housing part 13". In the actual embodiment, the clamping devices 53 are placed in the valve housing block 46 and variants thereof in the collar 21.

In continuation of Figs. 1 and 3 and the A view, the B-view shows the first valve housing part 13' as seen from the inside.

The first valve housing part 13' has the first inner surface 45 which is preferably circular or a semi-circular in cross-section of the centre axis 4 and is continued along the centre axis 4 between the two collars 21.

In the area within the valve housing block 46, the recess 50 and the slot 52 are seen in the inner surface 45 for forming a passage from the exterior to the interior of the first valve housing part 13' such that the valve body 11 from outside can be passed through the valve housing block 46 and attack and penetrate a pipe 3. Furthermore, the recess 50 provides room for receiving and discharging cuttings from the pipe 3 itself.

In the A-view as well as the B-view, the dividing plane 12 is defined by the slot 52.

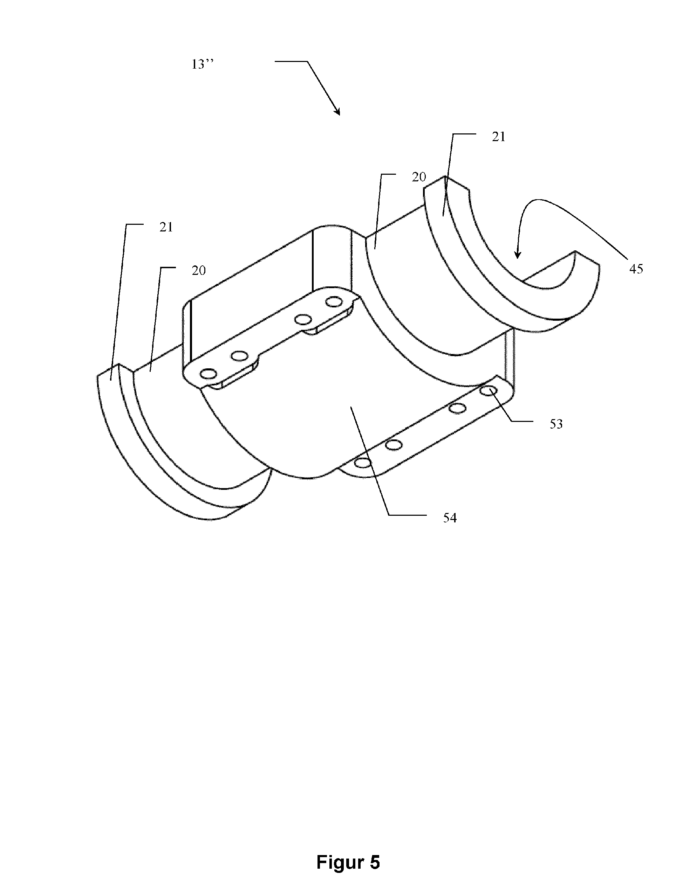

Fig. 5 shows an isometric view of an embodiment of a part of the valve housing 13, which part is a second valve housing part 13" from Fig. 1, and which is intended for fitting with the first valve housing part 13' on the preceding Figures.

The second valve housing part 13" has the neck 20 and the collar 21 and herebetween a valve housing belt 54 which is a reinforced area for interacting with the valve housing block 46.

The second valve housing part 13" has in addition clamping means 53 for assembling with the first valve housing part 13'. The clamping means 53 are here disposed in the reinforced area in the valve housing belt 54.

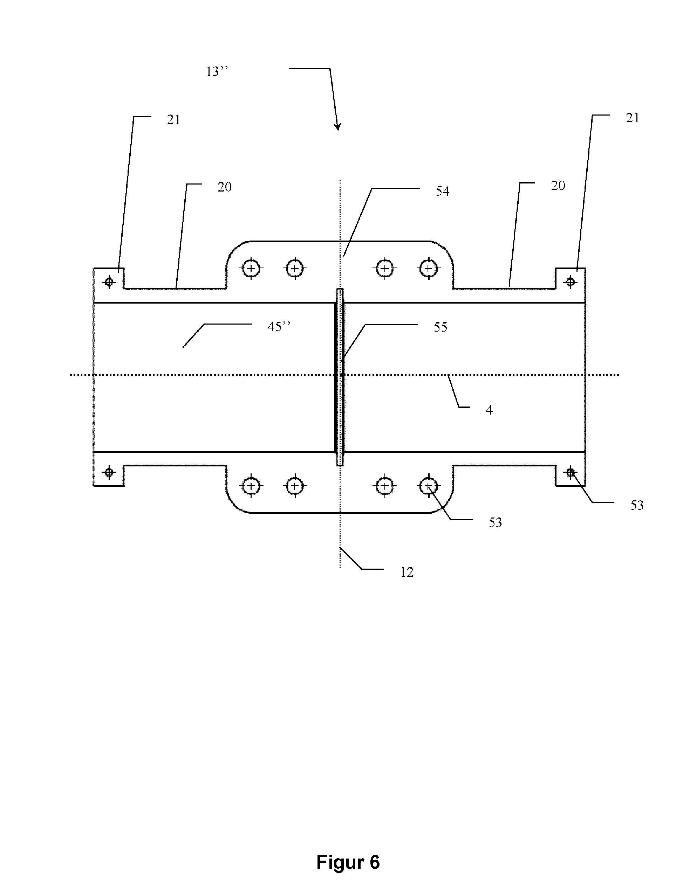

Fig. 6 shows the second valve housing part 13" in a plan view as seen from the centre axis 4.

The second valve housing part 13" has the neck 20 and the collar 21 and herebetween the valve housing belt 54 which is a reinforced area for interacting with the valve housing block 46.

The second valve housing part 13" has in addition clamping means 53 for assembling with the first valve housing part 13'. The clamping means 53 are here disposed in the reinforced area in the valve housing belt 54 and in the collars 21.

The second valve housing part 13" has a depression 55 in the dividing plane 12 for receiving the valve body 11.

The second valve housing part 13" has the second inner surface 45" which is preferably a semi-circle in the cross-section of the centre axis 4 and is continued along the centre axis 4 between the two collars 21.

The second inner surface 45" is thus closed and includes the depression 55.

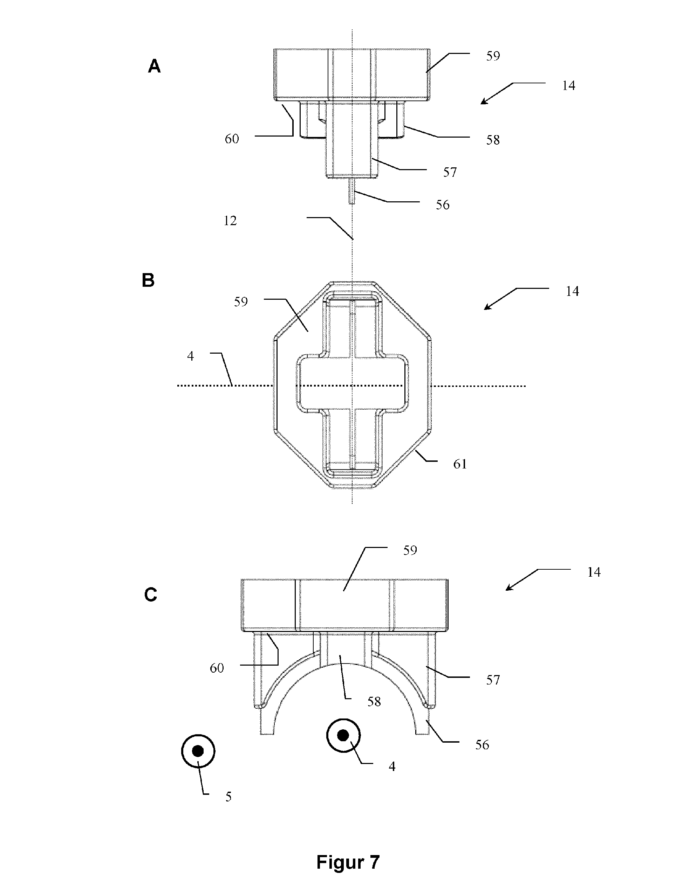

Fig. 7 shows an embodiment of the guide means 14 in Fig. 1 in different plan views.

The A-view shown the guide means 14 in a view perpendicular to the dividing plane 12 and perpendicular to the axial direction 5. The view shows that the guide means 14 towards the centre axis is concave whereby the guide means 14 can be inserted in the valve housing block 46 in the first valve housing part 13'.

The guide means 14 has guide 56 designed for a tight guiding of the valve body 11 itself, the guide 56 being enclosed by a firm structure which is a guide reinforcement 57.

The guide means 14 has a recess structure 58 defining the recess 50 and which is adapted to the design of the spindle thread 25 or similar device.

The structures in the guide means 14 mentioned above is supported in a guide means top 59 having a complementary bearing face 60 for bearing against the contact surface 48 in the valve housing block 46.

The B-view shows the guide means 14 in a view from outside towards the centre axis 4. The guide means top 59 has a periphery 61 which is complementary to the valve housing fit 47 and which in an actual embodiment is a polygon with eight sides for precise disposition and gathering of moments in connection with use.

The C-view shows the guide means 14 in a view perpendicular to the axial direction 5.

The guide 56 ends towards the centre axis 4 as a semi-circle for bearing against a circular pipe. The recess structure 58 also ends towards the centre axis 4 as a circular arc for bearing against a circular pipe. In general, the ends of the guide 56 and/or the recess structure 58 will be shaped according to the shape of the outer periphery 7 of a pipe 3.

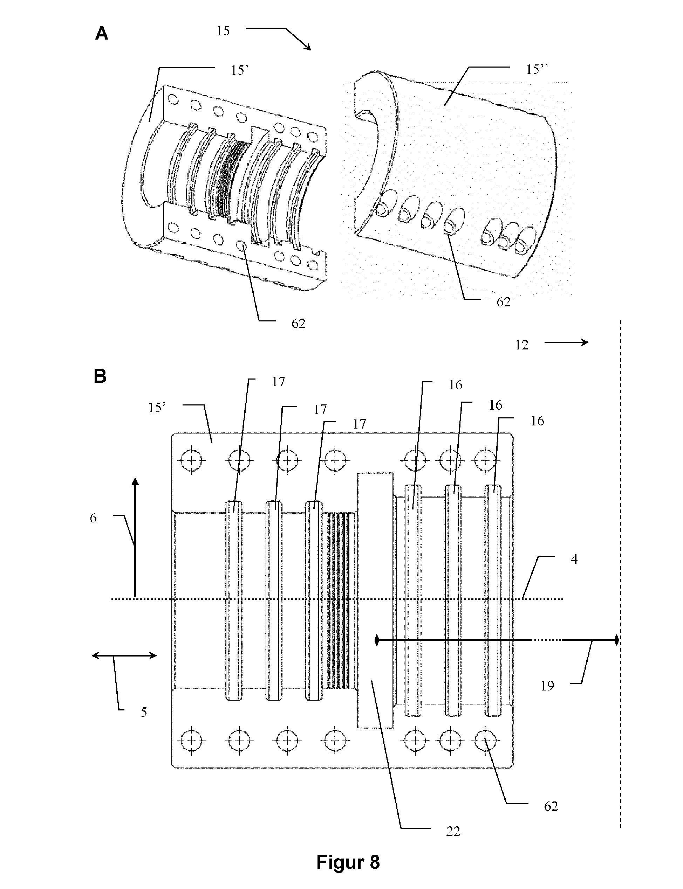

Fig. 8 shows an embodiment of the jacket 15 on Fig. 1, the jacket 15 shown here in a first jacket part 15' and a second jacket part 15" in A: an isometric view, and B: in a plan view as seen from the centre axis 4.

Each jacket part 15, 15" has jacket clamping means 62 for assembling the two jacket parts around a pipe 3 whereby the jacket 15 can be positioned and retained on a pipe 3 and tightly grip around a pipe 3 as well.

The B-view shows an embodiment of the sealing means 16 and the gripping means 17 in the first jacket part 15' as the dividing plane 12 on the Figure is to the right of the first jacket part 15'.

The groove 22 is disposed between the sealing means 16 and the gripping means 17. The groove 22 is formed in the jacket 15 to fit the collar 21 on the valve housing 13. As the collar 21 provides a spacing via the neck 20 from the location of the valve body 11 in the valve housing 13 and thereby the dividing plane 12, the total form connection 19 is achieved in axial direction 5.

In the radial direction 6, the gripping means 17 have a dimension which is adapted to the diameter of an actual pipe 3.

In the radial direction 6, the sealing means 16 have a dimension which is adapted to the diameter of an actual pipe 3 and the thickness in radial direction 6 of the neck 20.

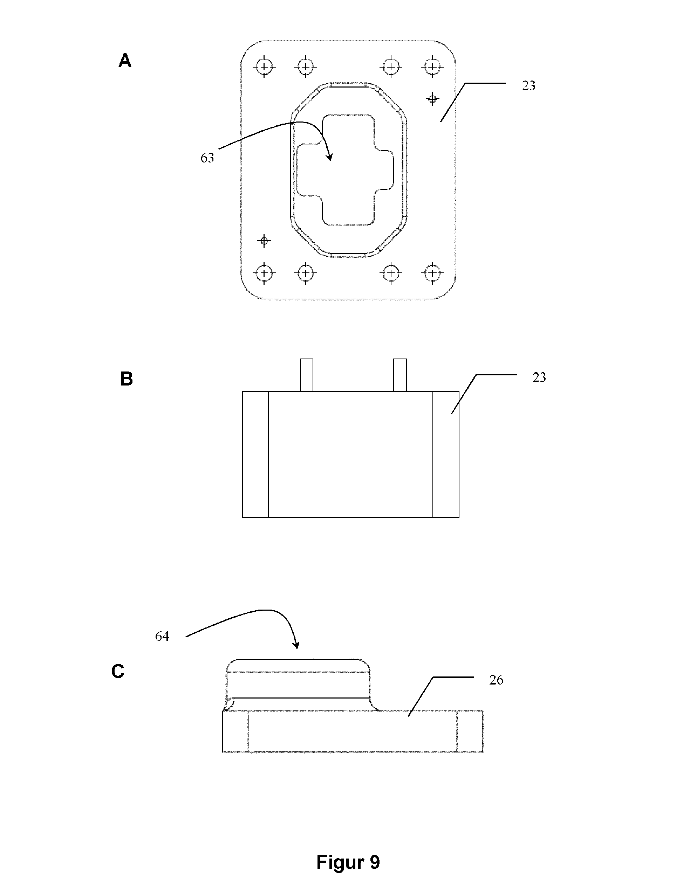

Fig. 9 shows the valve housing top 23 and the valve housing cover 26, as A: shows a plan view of the valve housing top 23 in radial direction towards the centre axis 4, and B: shows a plan view of the valve housing top 23 perpendicular to the axial direction 5 and perpendicular to the radial direction 6. C: shows the valve housing cover 26.

The valve housing top 23 has a valve housing top opening 63 for passing through the spindle 24.

The valve housing cover 26 has a valve housing cover opening 64 for passing through the spindle 24 or at least the spindle grip 27.

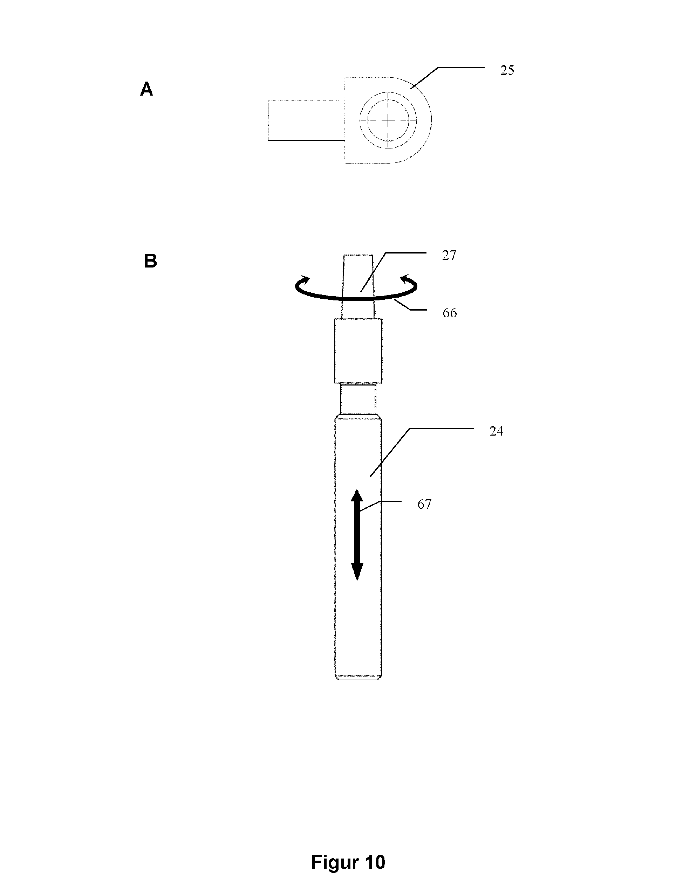

Fig. 10 shows A: the spindle thread 25, and B: the spindle 24.

The spindle thread 25 has a stub 65 for interacting with the opening 34 in the valve body 11 for transmitting forces to the valve body 11 through the spindle 24 as the spindle is rotated via a tool grip around the spindle grip 27. Hereby is performed a spindle rotation 66 which via the screw thread devices result in a linear spindle movement 67 along the spindle 24, the linear spindle movement 67, thus resulting in a movement of the valve body 11 in radial direction 6.

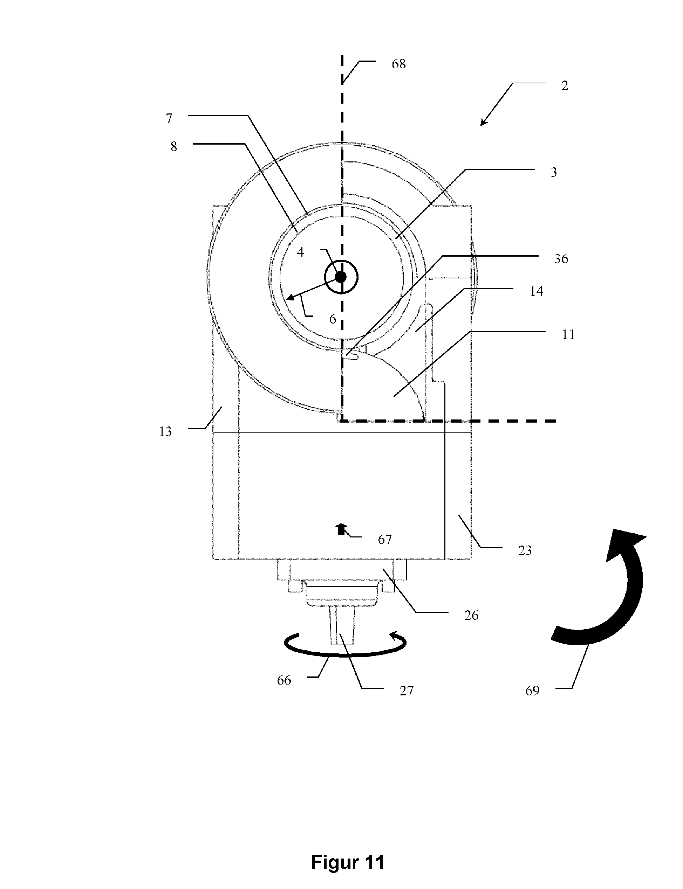

With reference to the preceding Figures, Fig. 11 shows a view perpendicular to the centre axis 4 and by partial x-ray section 68 of an assembled stop valve 2 around a pipe 3 where the valve body 11 is outside a pipe 3 and ready to cut a pipe 3, and how the valve housing 23 can be rotated about the centre axis 4 of a pipe 3 in a cutting direction 69.

Rotation of the valve housing 23 around the centre axis 4 of a pipe 3 occurs in that the collars 23 can be rotated in the grooves in the jackets 15.

As the spindle grip 27 is turned in a spindle rotation 66, the linear spindle movement 67 is achieved whereby the cutting edge 36 is moved into contact with a pipe 3 at the outer periphery 7.

The cutting direction 69 is adapted to the disposition of the cutter projection 41 such that the cutting edge 42 engages a pipe 3 as the valve housing 13 is turning in the cutting direction 69.

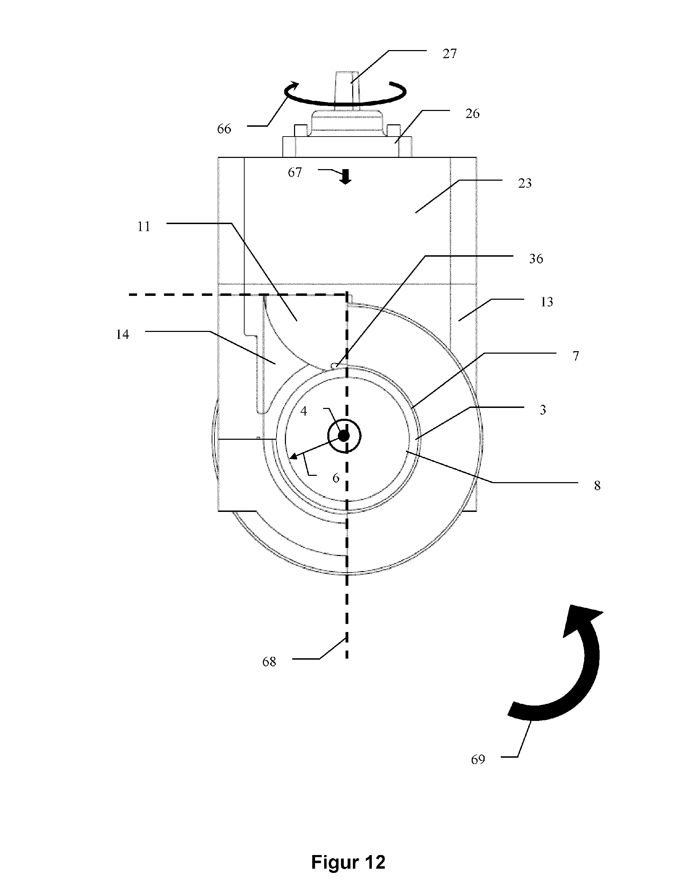

Fig. 12 shows in continuation of Fig. 11 a view of an assembled stop valve 2 as seen at right angles to the centre axis 4 and with a partial x-ray section 68 around a pipe 3.

As the cutting edge 36 begins or performs the cutting in a pipe 3, the spindle grip 27 is turned in the spindle rotation 66 whereby the cutting edge 36 is moved in radial direction 6 against the centre axis 4 as appearing by the spindle movement 67 with a speed adapted to the rotation of the valve housing 13 with the valve body 11 in the cutting direction 69 in such a way that the cutting edge 36 works itself through a pipe 3 from the outer periphery 7 to the inner periphery 8.

The cavity 39 will collect cuttings from the cutting of a pipe 3, and these cuttings will find rest in the recess 50 by the use itself and the force of gravity.

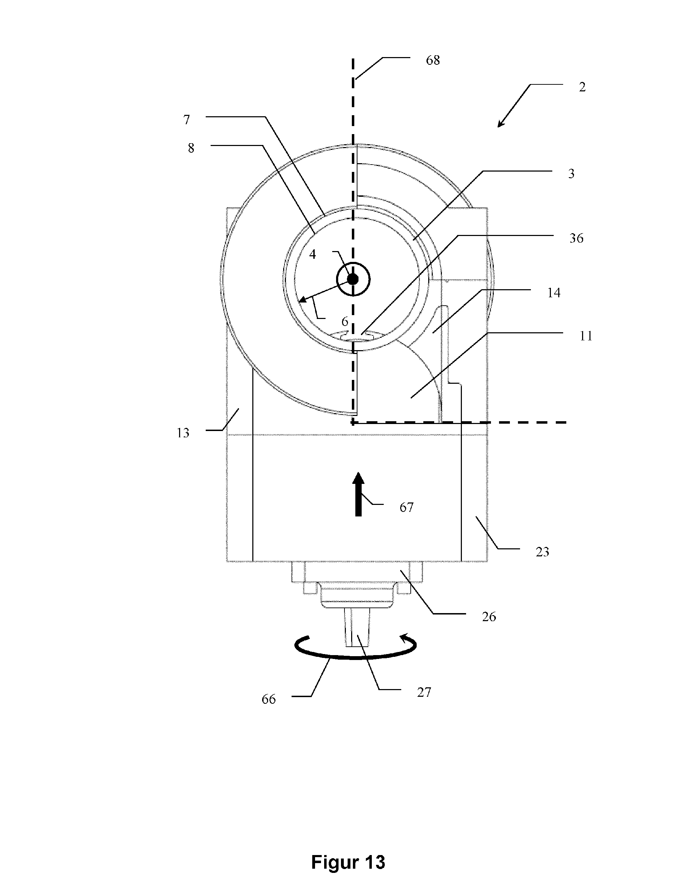

Fig. 13 shows in continuation of Fig. 11 and 12 a view of an assembled stop valve 2 as seen at right angles to the centre axis 4 and with a partial x-ray section 68 around a pipe 3.

The cutting edge 36 of the valve body is here through the inner periphery 8 of a pipe 3 and the cutting itself is finished.

Due to the grip of the jackets 15 around a pipe 3 and the connecting means 18 to the valve housing 13 there is provided the form connection 19' which ensures that the two pipe parts at each side of the dividing plane 12 are not pushed together or pulled apart, and then the valve body 11 can be moved by the guide means 13 via a linear movement 67 provided by a continued spindle rotation 66.

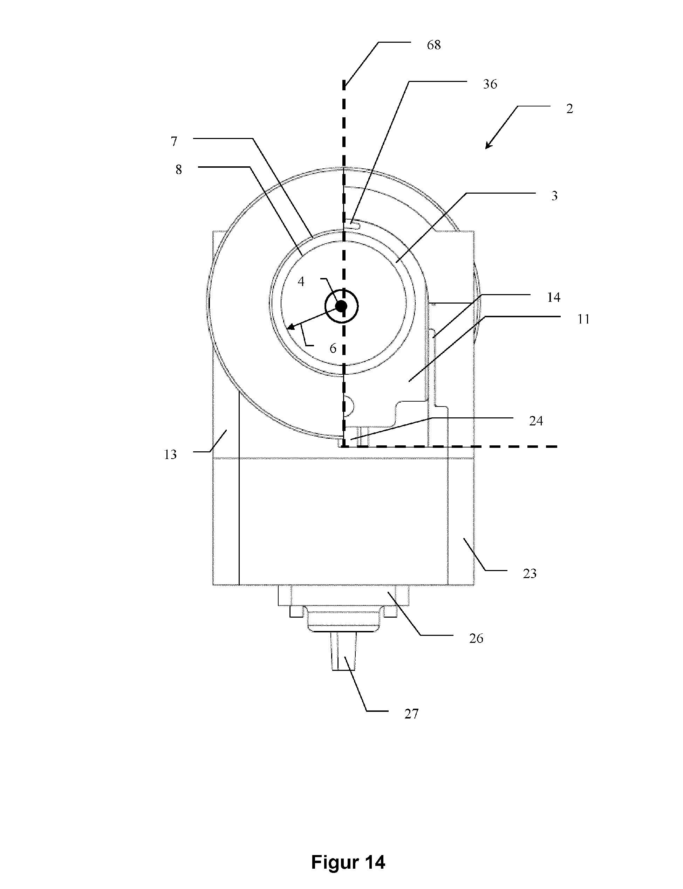

Fig. 14 shows in continuation of Fig. 11, 12 and 13 a view of an assembled stop valve 2 as seen at right angles to the centre axis 4 and with a partial x-ray section 68 around a pipe 3, and where the valve body 11 is passed completely through a pipe 3.

The linear spindle movement 67 is finished, and the cutting edge 36 is now in the depression 55 in the second valve housing part 13" of the valve housing 13.

The valve housing 11 has now stopped the fluid 10 in a pipe from coming from one side of the dividing plane 12 of a pipe 3 to the other side of the dividing plane 12.

According to the use of the stop valve 2, it is obvious for a skilled in the art to fit suitable sealings between the individual parts of the kit 1 of the stop valve 2 to a required extent.

## Claims

1. A kit (1) for a stop valve (2) for a pipe (3) with a centre axis (4), a radial direction (6) and axial direction (5), the kit (1) including:
- a valve body (11) with a cutting edge (36), the valve body (11) adapted for complete or partial insertion in a pipe (3) in a dividing plane (12);
- a valve housing (13) with guide means (14) for radial guiding of the valve body (11);
- at least one jacket (15) including sealing means (16) for sealed connection between the valve housing (13) and a pipe (2), and gripping means (17) for gripping a pipe (3), where the valve housing (13) and the at least one jacket (15) include interacting connecting means (18; 20, 21, 22) separate from the sealing means (16), the connecting means (18; 20, 21, 22) being formed by a form connection (19, 19') in axial direction (5), and **characterised in that** the valve housing (13) in an interior and around the guide means (14) is provided with a recess (50) for receiving material, such as cuttings, particles or the like, from a pipe (3).

2. A kit (1) for a stop valve (2) according to claim 1, **characterised in that** at each side of the dividing plane (12) along the axial direction (5), the valve housing is extended with a neck (20), along which necks (20) there is provided at least one collar (21) designed for interaction with at least one complementing groove (22) in each jacket (15).

3. A kit (1) for a stop valve (2) according to any of claims 1 to 2, **characterised in that** the connecting means (18; 20, 21, 22) are provided for rotation about the centre axis (4), the connecting means (18; 20, 21, 22) e.g. made as the neck (20) which in the cross-section at right angles to the centre axis (4) has a circular projection in the form of the collar (21) for fitting and rotation in a complementary circular groove (22) in the jacket (15).

4. A kit (1) for a stop valve (2) according to any of claims 1 to 3, **characterised in that** the valve body (11) has at least one cutting edge (36).

5. A kit (1) for a stop valve (2) according to any of claims 1 to 4, **characterised in that** in connection with and tightly fitting on the valve housing (13), the kit (1) further includes an insertion structure (46,23,26,14) for an inserting device (24, 25) for complete or partial guiding of the valve body (11) in radial direction (6), the insertion structure (46,23,26,14) e.g. consisting of one or more of the following: a valve housing block (46), a valve housing top (23), a valve housing cover (26), in which there is access for the guide means (14), and which insertion device (24, 25) e.g. is a spindle (24) interacting with a spindle thread (25).

6. A kit (1) for a stop valve (2) according to claim 5, **characterised in that** the insertion device (24, 25) and the valve housing (13) have means for mounting and dismounting the insertion device (24, 25) to/from the valve housing (13).

7. A kit (1) for a stop valve (2) according to any of claims 1 to 6, **characterised in that** the recess is a cavity in the valve housing, the cavity completely or partially enclosing the area around the cutting edge in the valve body.

8. A master kit (1) according to any of claims 1 to 7, **characterised by** including at least two units of any of the unit types: the valve body (11), the valve housing (13), the connecting means (18; 20, 21, 22) and the jacket (15), the unit types being made of various materials, in various dimensions, the unit types being provided with uniform assembling means and/or assembling structures between the various unit types.

9. A stop valve (2) according to any of claims 1 to 8, **characterised in that** the stop valve (2) is provided by elements from the kit (1).

10. A method for stopping flow of a fluid (10) in a pipe (3), consisting of the following steps:
- selecting a valve housing (13) from the kit (1) and mounting the valve housing (13) around a pipe (3);
- selecting at least one jacket (15) from the kit (1) and mounting the at least one jacket (15) around the valve housing (13) and a pipe (3);
- fastening the at least one jacket (15) to a pipe (3);
- selecting the valve body (11) from the kit (1) and inserting the valve body (11) into a pipe (3) by:
- insertion of the valve body (11) in radial direction (6) in and through a pipe (3) by using the insertion device (24, 25); or
- in combination with the above, a rotation of the valve body (11) around the centre axis (4) by gradual insertion in radial direction (6) through a pipe (3).
